# EUROPEAN PATENT APPLICATION

(11) **EP 1 207 320 A2**
(43) Date of publication of application: **22.05.2002**
(21) Application number: 01127127.7
(22) Date of filing: 15.11.2001
(51) Int. Cl.: F16H 59/10, F16H 63/42

(54) **Range shift display unit and range shift display method**

(30) Priority: 16.11.2000 JP 2000349724
(71) Applicant: AISIN AW CO., LTD., Anjo-shi, Aichi-ken 444-1192 (JP)
(72) Inventor: Satou, Chikashi, c/o Aisin Aw Co.,Ltd., Anjo-shi, Aichi-ken 444-1192 (JP); Murase, Yoshitaka, c/o Aisin Aw Co.,Ltd., Anjo-shi, Aichi-ken 444-1192 (JP); Eishima, Hirotoshi, c/o Aisin Aw Co.,Ltd., Anjo-shi, Aichi-ken 444-1192 (JP)
(74) Representative: Leson, Thomas Johannes Alois, Dipl.-Ing.

(57) **Abstract**

A range shift display unit according to the present invention is provided with target range detection means that detects a selected target range and generates a range signal corresponding to the detected target range, and display processing means for driving a display portion corresponding to the target range by a driving method for a predetermined target range. Since the display portion corresponding to the target range is driven by a driving method for a predetermined target range based on the range signal, the driver can identify which range the target range is just by seeing the display device.

## Description

### BACKGROUND OF THE INVENTION

### 1.Field of the Invention

The present invention relates to a range shift display unit and a range shift display method.

### 2.Description of Related Art

Conventionally, in a vehicle mounted with an automatic transmission, a torque generated by driving an engine is transmitted to a transmission mechanism which changes the speed, and the rotation after the speed is changed is transmitted to driven wheels for running the vehicle. For this purpose, the transmission mechanism is disposed with a planetary gear unit having a plurality of gear elements, and frictional engagement elements such as a clutch and brake. By engaging and disengaging the frictional engagement elements, a combination in the planetary gear unit of a gear element to which the torque is input and a gear element from which the torque is output is changed.

In the aforementioned automatic transmission, each of the ranges such as a parking (P) range, a reverse (R) range, a neutral (N) range, a drive (D) range, and a low (L) range or the like is established, and a range shift display unit is disposed in order to shift each range as well as to display a shift state of the range in the transmission mechanism. In this range shift display unit, a predetermined range can be selected by a driver operating a shift lever. Namely, when the driver places the shift lever in a predetermined range position such as a P range position, an N range position, a D range position, an L range position or the like, a shift operation signal is generated by a shift sensor disposed adjacent to the shift lever. Further, a target range is detected based on the shift operation signal, a range signal corresponding to the detected target range is generated, and a drive motor is driven in accordance with the range signal.

In the mean time, the drive motor is coupled to a manual valve disposed in a hydraulic circuit in the transmission mechanism through a detent lever. When the drive motor is driven, the manual valve is shifted, and in accordance with shifting of the manual valve a predetermined range pressure is generated. Then, the predetermined range pressure is supplied to a hydraulic servo so that frictional engagement elements are selectively engaged.

Meanwhile, as an example, a position sensor is disposed adjacent to the detent lever, and a shift position signal is generated by the position sensor. On the basis of the shift position signal, each shift position of the manual valve such as a P shift position, an R shift position, an N shift position, a D shift position, and an L shift position or the like is detected, and the shift state of the range in the transmission mechanism is determined.

Further, on the basis of the shift position signal, a display signal is generated. The display signal is sent to an indicator, which displays the shift state by lighting up a display unit for "P", "R", "N", "D", and "L."

However, in the aforementioned conventional range shift display unit, even if the driver looks at the indicator it is not possible to identify what range the driver selected as the target range by operating a shift lever, namely the target range, is.

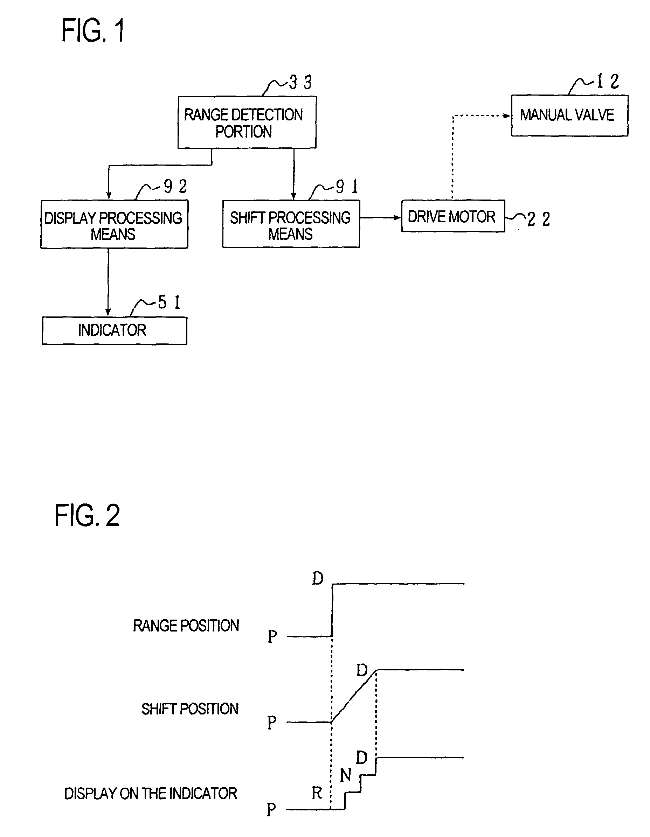

Fig. 2 is a time chart for explaining operation of a conventional range shift display unit.

In this case, with regard to the range positions, P indicates a state where the shift lever is placed in the P range position, and D indicates a state where the shift lever is placed in the D range position. With regard to the shift position, P indicates a state where the manual valve is placed in the P shift position, and D indicates a state where the manual valve has reached the D shift position. With regard to a display on the indicator, P indicates a state where the display unit for "P" is lit up, R indicates a state where the display unit for "R" is lit up, N indicates a state where the display unit for "N" is lit up, and D indicates a state where display unit for "D" is lit up.

In this case, when the driver shifts the shift lever from the P range position to the D range position in order to shift from the parking range, that is the current range, to the drive range, the drive range is detected, a range signal corresponding to the drive range is generated, and the drive motor is driven in accordance with the range signal. Consequently, the manual valve is shifted from the P shift position to the D shift position, and a D range pressure is generated.

Further, during this period, the shift position of the manual valve is detected, and this shift position continuously changes as shown in the figure. Further, the indicator lights each display unit for "P", "R", "N" and "D" in order corresponding to the shift positions.

However, even when the driver sees the indicator, the driver can only perceive that each display unit for "P", "R", "N", and "D" is lit up in order, but cannot identify that the target range is the drive range. Therefore, the driver is required to identify the range position by seeing the shift lever, which makes the operation for selecting the range troublesome.

### SUMMARY OF THE INVENTION

It is an object of the present invention to provide a range shift display unit and a range shift display method, which solve the foregoing problems with the conventional range shift display unit, by allowing the driver to easily identify what range the target range is.

### BRIEF DESCRIPTION OF THE DRAWINGS

Fig. 1 is a functional block diagram of a range shift display unit according to a first embodiment of the present invention;
Fig. 2 is a time chart for explaining operation of a conventional range shift display unit;
Fig. 3 is a schematic view of the range shift display unit according to the first embodiment of the present invention;
Fig. 4 is a flow chart showing operation of the range shift display unit according to the first embodiment of the present invention;
Fig. 5 is a time chart for explaining operation of the range shift display unit according to the first embodiment of the present invention;
Fig. 6 is a flow chart showing operation of the range shift display unit according to a second embodiment of the present invention; and
Fig. 7 is a time chart for explaining the operation of the range shift display unit according to the second embodiment of the present invention.

### DETAILED DESCRIPTION OF PREFERRED EMBODIMENTS

Embodiments of the present invention will now be explained in detail referring to the drawings.

Fig. 1 is a functional block drawing of a range shift display unit according to a first embodiment of the present invention.

In the figure, a reference character 33 denotes a range detection portion as target range detection means that detects the target range selected based on a shift operation by a driver and generates a range signal corresponding to the detected target range. A reference character 12 denotes a manual valve as shift means that is disposed at a plurality of shift positions and generates a range pressure corresponding to each shift position. Reference character 91 denotes processing means that drives a driver motor 22 as driving means based on the range signal and disposes the manual valve 12 at the shift position for the target range. A reference character 51 denotes an indicator as a display unit provided with a plurality of display portions corresponding to each range. In addition, reference character 92 denotes display processing means that drives the display portion corresponding to the target range by a predetermined driving method for the target range.

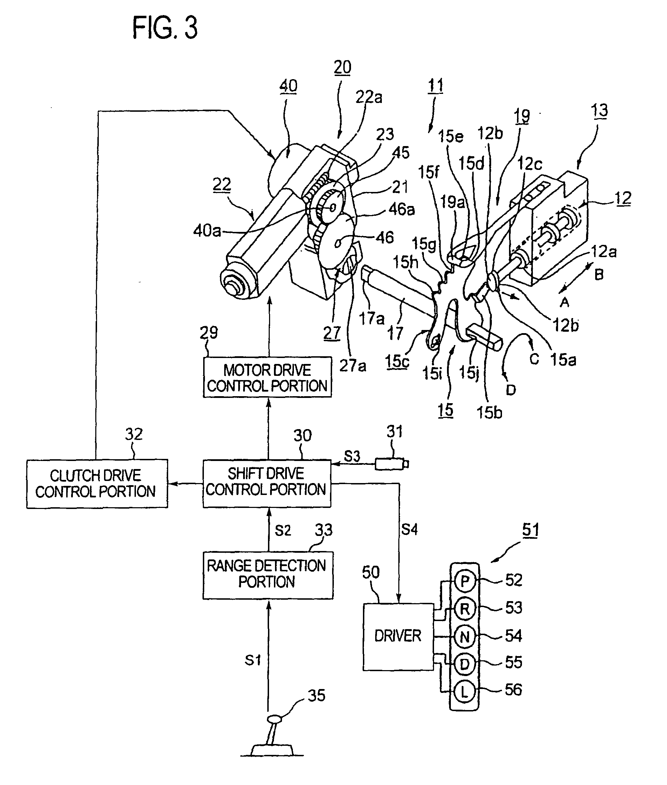

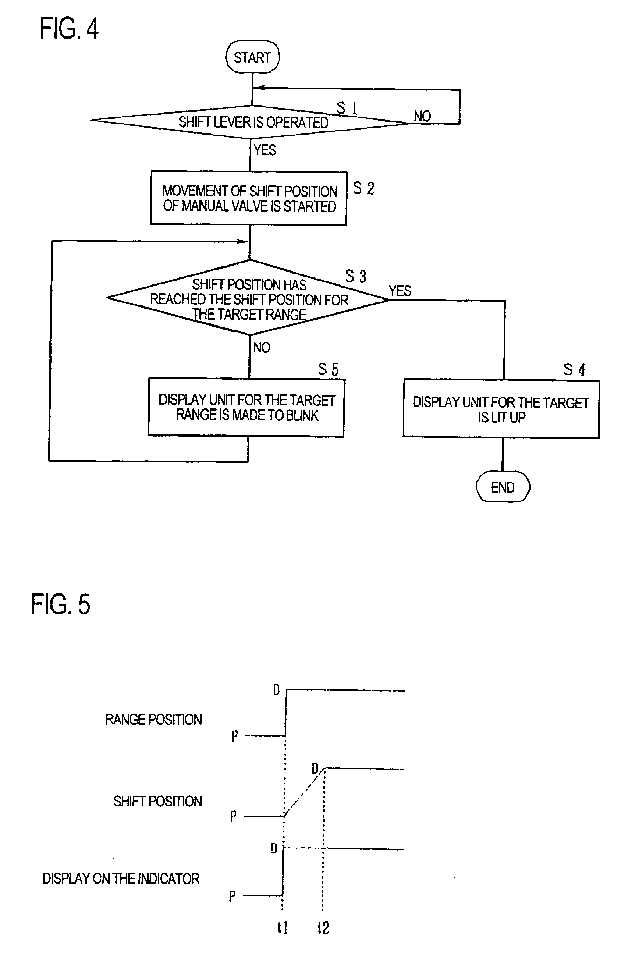

Fig. 3 is a schematic view of the range shift display unit according to the first embodiment of the present invention, and Fig. 4 is a flow chart showing operation of the range shift display unit according to the first embodiment of the present invention.

In the figure, reference character 11 denotes a range shift display unit, reference character 12 denotes a manual valve as shift means and a shift valve, reference character 13 denotes a valve body forming a hydraulic circuit of the transmission mechanism that constitutes an automatic transmission, not shown, and reference character 15 denotes a detent lever. The manual valve 12 is housed in the valve body 13 so as to constitute a part of the hydraulic circuit. The manual valve 12 is provided with a spool 12a that is movably disposed, and when the spool 12a is moved via the detent lever 15 in the axial directions (the directions shown by the arrows A and B), the manual valve 12 is shifted and disposed at a predetermined shift position. Accordingly, each range pressure such as an R range pressure, a D range pressure, an S range pressure, an L range pressure or the like is generated. Then, the predetermined range pressure is supplied to a predetermined hydraulic servo, not shown, through various valves which are not shown, so that frictional engagement elements in the transmission mechanism are selectively engaged.

Further, two discs 12b are disposed at the tip of the manual valve 12 at the side shown by the arrow A, and a pin 15a is attached to an arm portion 15b formed protruded to the right of the detent lever 15 as shown in Fig. 3., so that the pin 15a is engaged with an engagement groove 12c formed by each disc 12b. The detent lever 15 is provided with a plate-like main body 15c, and five range engage grooves 15d to 15h are formed at predetermined intervals on the upper portion of the main body 15c.

Next, each range engagement groove 15d to 15h is formed from the right to left in order as shown in Fig. 3 corresponding to each range of the automatic transmission, that is the parking "P" range, the reverse "R" range, the neutral "N" range, the drive "D" range and the low "L" range. In addition, on the left of the main body 15c in Fig. 3, a parking rod engagement hole 15I is formed for driving a parking mechanism, not shown, when the parking range is selected. Further, an engagement hole 15j of a rectangular shape is formed in a lower portion in substantially the center of the main body 15c, to which a range control shaft 17 which will be explained later is attached. The parking mechanism, not shown, of the vehicle is locked in the parking range, and released in other ranges.

One end of a detent spring 19 comprised of a leaf spring is secured to the upper end of the valve body 13, and the other end of the detent spring 19 rotatably supports a roller such that the roller 19a is selectively engaged with the range engagement grooves 15d to 15h. Since the detent spring 19 is attached to the valve body 13 in a shape urged downward as shown in Fig. 3, the roller 19a is always engaged with one engagement groove from among the engagement grooves 15d to 15h. The range control shaft 17 is disposed integrally with the detent lever 15 through the engagement hole 15j.
At the left end of the range control shaft 17 as shown in Fig. 3, there is formed an engagement portion 17a with a rectangular cross section, through which the engagement portion 17 is connected to a valve driving device 20. The valve driving device 20 is provided with a box-like casing 21, and a drive motor 22 is mounted as driving means to the box-like casing 21. A worm 22a and an electromagnetic clutch 40 are attached to the output shaft, not shown, of the drive motor 22. A worm wheel 23 is attached to a cylindrical input shaft, not shown, of the electromagnetic clutch 40. Further, the worm 22a is meshed with the worm wheel 23.

In the electromagnetic clutch 40, an output shaft 40a is disposed like a core and coaxially with respect to the input shaft, and rotatably supported with respect to the casing 21.

One end of the input shaft is connected to a adsorbing rotor, not shown, and one end of the output shaft 40a is connected to a adsorbed disc, not shown. The adsorbing rotor and the adsorbed disc are disposed so as to face each other. The adsorbing rotor can adsorb or release the adsorbed disc by exciting or deexciting an excitation coil, not shown, disposed in the electromagnetic clutch 40.

In addition, a first small gear 45 is attached to the other end of the output shaft 40a and meshed with a large gear 46a attached to an intermediate shaft 46 rotatably supported with respect to the casing 21. In addition, a second small gear, not shown, is attached to the intermediate shaft 46 and meshed with an output gear 27 formed in a fan shape. The output gear 27 is rotatably supported with respect to the casing 21, and formed with an engagement hole 27a at the central portion. The engagement portion 17a is fitted into the engagement hole 27a so that the output gear 27 is engaged with the engagement portion 17.

Reference character 35 denotes a shift lever as speed selection means, which can be placed at a predetermined position among the P range position, the N range position, the D range position, and the L range position by operation of the shift lever 35. In this embodiment, the shift lever 35 is used as the speed selection means; however, a shift switch may be used in place of the shift lever 35.

A shift sensor, not shown, as shift operation signal generation means, which is disposed adjacent to the shift lever 35, detects a change of a range position of the shift lever 35, and generates a shift operation signal S1. The shift operation signal S1 is sent to a range detection portion 33 as target range detecting means. The range detection portion 33 detects the target range based on the shift operation signal S1, generates a range signal S2 corresponding to the detected target range, and sends the range signal S2 to a shift operation control portion 30. When a shift switch is used as the speed selection means, the shift switch also serves as the shift operation signal generation means.

Adjacent to the detent lever 15, a position sensor 31 as shift position detection means is attached to the automatic transmission. The position sensor 31 detects the position of the detent lever 15 as the shift position for the manual valve 12 and generates a shift position signal S3. Next, on the basis of the shift position signal S3, each shift position of the manual valve 12, that is, the P shift position, the R shift position, the N shift position, the D shift position, or the L shift position is detected, and the shift state of the range is determined in the transmission mechanism.

Further, the shift operation control portion 30 is connected with a motor drive control portion 29 for driving the drive motor 22 and a clutch drive control portion 32 for engaging and disengaging the electromagnetic clutch 40. The drive motor 22 is driven and the electromagnetic clutch 40 is engaged and disengaged based on the range signal S2 and the shift position signal S3.

In the range shift display unit 11 with the aforementioned structure, while the vehicle is running, shift position processing means 91 conducts shift processing and determines whether or not the range position of the shift lever 35 has been changed by a shift operation by the driver based on the range signal S2 sent from the range detection portion 33. When the shift processing means determines that the range position has been changed, it compares the current range before the shift lever 35 is operated with the target range after the shift lever 35 is operated, and determines whether to drive the drive motor 22 in the forward direction or the reverse direction.

When the shift processing means 91 determines the direction of driving the drive motor 22, it commands the clutch drive control portion 32 to engage with the electromagnetic clutch 40, and commands the motor drive control portion 29 to drive the drive motor 22 in the thus determined direction of driving.

Next, the clutch drive control portion 32 excites the excitation coil such that the adsorbing rotor adsorbs the adsorbed disc so as to engage the electromagnetic clutch 40. While, the motor drive control portion 29 drives the drive motor 22 in the thus determined direction of driving. Accordingly, rotation of the drive motor 22 is transmitted to the output gear 27 through the output shaft of the drive motor 22, the worm 22a, the worm wheel 23, the input shaft of the electromagnetic clutch 40, the adsorbing rotor, the adsorbed disc, the output shaft 40a, the first small gear 45, the large gear 46a, and the second small gear, and rotates the range control shaft 17 at a predetermined angle in the directions as shown by the arrows C, D.

Consequently, the detent lever 15 is rotated together with the arm portion 15b at a predetermined angle in the directions shown by the arrows C and D, and rotates the pin 15a together with the arm portion 15b at a predetermined angle in the directions shown by the arrows C and D. In this case, when the pin 15a is rotated in the directions shown by the arrows C and D, the position of the pin 15a in the directions shown by the arrows A and B is changed according to the amount of rotation in the directions shown by the arrows C and D. Accordingly, the spool 12a is moved only an amount equal to the amount of change in the directions shown by the arrows A and B position of the pin 15a. As a result, the shift position of the manual valve 12 is shifted.

Further, the shift processing means 91 determines, on the basis of the position of the detent lever 15 detected by the position sensor 31, whether or not the roller 19a is engaged with the range engagement groove corresponding to the target range among the range engagement grooves 15d to 15h. When the roller 19a is engaged with the range engagement groove corresponding to the target range among the range engagement grooves 15d to 15h, the shift processing means 91 commands the clutch drive control portion 32 to release the electromagnetic clutch 40, and commands the motor drive control portion 29 to stop the drive motor 22.

Then, the clutch drive control portion 32 immediately releases excitation of the excitation coil, and disengages the electromagnetic clutch 40 so as not to transmit the rotation of the drive motor 22 to the output shaft 40a, and the motor drive control portion 29 stops the drive motor 22. In this manner, the detent lever 15 is located in a state where the roller 19a is engaged with the range engagement groove corresponding to the target range among the range engagement grooves 15d to 15h,. Then, the position sensor 31 detects the position of the detent lever 15 as the shift position of the manual valve 12 and generates the shift position signal S3.

In the meantime, shift state determination processing means, not shown, processes shift state determination, and determines the shift state of the range in the transmission mechanism based on the shift position signal S3. Next, display processing means 92 of the shift operation control portion 30 processes the display, sends a display signal S4 to a driver 50 based on the range signal S2 and the shift position signal S3, and the driver 50 actuates an indicator 51 as a display device based on the display signal S4. The indicator 51, provided with display units 52 to 56 for "P", "R", "N", "D", and "L", lights up and blinks by driving each display unit 52 to 56 and displays the shift state.

In this case, when the shift lever 35 is operated, driving of the drive motor 22 is started, and the shift position of the manual valve 12 starts being shifted, blinking processing means, not shown, of the display processing means 92, on the basis of the range signal S2, blinks by driving the display unit corresponding to the target range by a predetermined driving method for the target range, and in this embodiment, by a first driving method for the target range. When the shift position of the manual valve 12 has reached the shift position for the target range, lighting processing means, not shown, of the display processing means 92, on the basis of the shift position signal S3, lights up by driving the display unit corresponding to the target range by a predetermined driving method for the target range, and in this embodiment by a second driving method for the target range.

In the aforementioned manner, when the range position is shifted by operating the shift lever 35, the display unit corresponding to the target range blinks. Therefore, the driver can easily identify which the target range is by seeing the indicator 51. Accordingly, the need to identify the range position by seeing the shift lever 35 is eliminated, thereby streamlining the work for selecting a range.

Further, the display unit for the target range blinks until the shift position of the manual valve 12 reaches the shift position for the target range. Therefore, it can be easily identified that the drive motor 22 is being driven and the shift position of the manual valve 12 is being shifted. Accordingly, operability of the shift lever 35 is improved.

Next, the flow chart will be explained.

Step S1 is standby for operation of the shift lever 35.

In Step S2, shifting of the shift position of the manual valve 12 is started.

In Step S3, whether or not the shift position has reached the shift position for the target range is determined. If the shift position has reached the shift position for the target range, the process proceeds to Step S4, and if not, the process proceeds to Step 5.

In Step S4, the display unit for the target range is lit up and the process is completed.
In Step S5, the display unit for the target range blinks, and the process returns to Step S3.

Fig. 5 is a time chart for explaining operation of the range shift display unit according to the first embodiment of the present invention.

In this case, with regard to the range position, P indicates a state where the shift lever 35 (as shown in Fig. 3) is placed in the P range position, and D indicates a state where the shift lever 35 is placed in the D range position. With regard to the shift position, P indicates a state where the manual valve 12 is placed in the P shift position, and D indicates a state where the manual valve 12 has reached the D shift position. Further, with regard to display on the indicator 51, P indicates a state where the display unit 52 for "P" is lit up, and D indicates a state where the display unit 55 for "D" is lit up after being made to blink.

In this case, the driver shifts from the parking range, which is the current range, to the drive range, which is the target range, at a timing t1. When the driver moves the shift lever 35 from the P range position to the D range position, a D range is detected and the range signal S2 is generated. Then, in accordance with the range signal S2, the drive motor 22 is driven. Consequently, the manual valve 12 is shifted from the P shift position to the D shift position, and D range pressure is generated.

Further, during this period, the shift position of the manual valve 12 is detected, and continuously changed as shown in the figure. In addition, the display processing means 92 lights up the display unit 52 for "P" until the timing t1, blinks the display unit 55 for "D" from the timing t1 to a timing t2, and lights up the display unit 55 of "D" from the timing t2 onward.

Next, a second embodiment of the present invention will be explained.

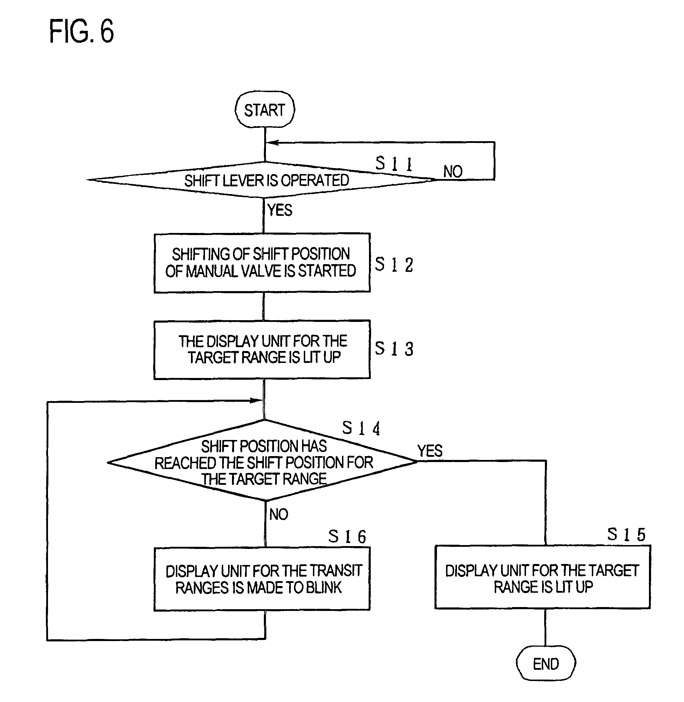

Fig. 6 is a flow chart showing operation of the range shift display unit in the second embodiment according to the present invention.

In this case, when a shift lever 35 as the speed selection means (shown in Fig. 3) is operated so as to start driving the drive motor 22 as driving means, and shifting of the shift position of the manual valve 12 as shift means and shift valve is started, lighting processing means, not shown, of the display processing means 72, on the basis of the range position signal S2, lights up by driving the display unit corresponding to the target range by a predetermined driving method for the target range, and in this embodiment, by a driving method for the third target range. Next, blinking processing means, not shown, on the basis of the range position signal S2, makes each display unit corresponding to each range from the current range to the target range, namely the transient ranges blink by driving them, by a driving method for the transient ranges. When the shift position of the manual valve 12 has reached the shift position for the target range, the lighting processing means again lights up by driving the display unit corresponding to the target range by the driving method for the third target range.

As above described, when the range position is shifted by operating the shift lever 35, the display unit corresponding to the target range is lit up. Therefore, the driver can easily identify which range the target range is just by seeing the indicator 51 as the display device. Therefore, the necessity of identifying the range position by seeing the shift lever 35 is eliminated, thereby streamlining the work for selecting a range

Further, the display unit for the transient ranges is being made to blink until the shift position of the manual valve 12 has reached the shift position for the target range. Accordingly, it can be more easily identified that the drive motor 22 is being driven and the shift position of the manual valve 12 is being shifted, and therefore operability of the shift lever 35 can be improved.

Next, the flow chart will be explained.

Step S11 is standby for operation of the shift lever 35.

In Step S12, shifting of the shift position of the manual valve 12 is started.

In Step S13, the display unit for the target range is lit up.

In Step S14, whether or not the shift position has reached the shift position for the target range is determined. If the shift position has reached the shift position for the target range, the process proceeds to Step S15, and if not, the process proceeds to Step 16.

In Step S15, the display unit for the target range is lit up and the process is completed.

In Step S16, the display unit for the transient ranges are made to blink, and the process returns to Step S14.

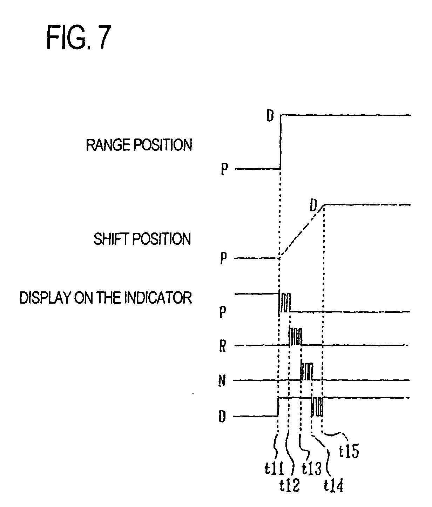

Fig. 7 is a time chart for explaining the operation of the range shift display unit according to the second embodiment of the present invention.

In this case, with regard to the range position, P indicates a state where the shift lever 35 (as shown in Fig. 3) is placed in the P range, and D indicates a state where the shift lever is placed in the D range position. With regard to the shift position, P indicates a state where the manual valve 12 is placed in the P shift position, and D indicates a state where the manual valve 12 has reached the D shift position. With regard to the display on the indicator 51, P indicates a state where the display unit 52 for the "P" is lit up until the timing t11, made to blink from the timing 11 to the timing 12 and turned off at the timing t12 onward, R indicates a state where the display unit 53 for "R" is lit up until the timing t12, made to blink from the timing 12 to the timing 13 and turned off at the timing t12 onward, N indicates a state where the display unit 54 for "N" is lit up until the timing t13, made to blink from the timing 13 to the timing 14 and turned off at the timing t14 onward, and D indicates a state where the display unit 55 for "D" is turned off until the timing t11, lit up from the timing t11 to the timing 14, flashed from the timing 14 to the timing 15, and turned off at the timing t15 onward.

In this case, when the driver moves the shift lever 35 from the P range position to the D range position so as to shift from the parking range which is the current range to the drive range which is the target range, the shift operation signal S1 is generated by the shift sensor, and the range signal S2 is generated by the shift operation signal S1. Next, the drive motor 22 is driven in accordance with the range signal S2. Consequently, the manual valve 12 is shifted from the D shift position to the P shift position, and the D range pressure is generated.

Further, during this period, the position sensor 31 detects the shift position of the manual valve 12 and the shift position is continuously changed as shown in the figure. In addition, on the basis of the shift position signal S3, the display processing means 92 lights up the display unit 52 for "P" until the timing t11, lights up the display unit 55 for "D" from the timing t11 to the timing t14, blinks the display unit 52 for "P" from the timing t11 to the timing t12, blinks the display unit 53 for "R" from the timing t13 to the timing t14, blinks the display unit 54 for "N" from the timing t14 to the timing t15, blinks the display unit 55 for "D" from the timing t14 to the timing 15 and lights up the display unit 55 for "D" at the timing t15 onward.

In each embodiment as above described, when the manual valve 12 has not reached the shift position for the target range, a predetermined display unit is flashed. The display units can also be lit up in a different color from the color used in the display device for the target range, a display device indicating that the manual valve 12 is at operation is lit up, or a buzzer can be made to sound.

In each embodiment as above described, an explanation was given regarding a vehicle mounted with an automatic transmission. However, the present invention may be applied to an electrically powered vehicle such as an electric vehicle and hybrid vehicle or the like. In these cases, a motor is disposed as the driving means for locking and releasing the parking mechanism.

The present invention is not limited to the embodiments as disclosed above, but various modifications can be permitted based on the spirit of the present invention, and these modifications shall not be excluded from the scope of the present invention.

A range shift display unit according to the present invention is provided with target range detection means that detects a selected target range and generates a range signal corresponding to the detected target range, and display processing means for driving a display portion corresponding to the target range by a driving method for a predetermined target range. Since the display portion corresponding to the target range is driven by a driving method for a predetermined target range based on the range signal, the driver can identify which range the target range is just by seeing the display device.

## Claims

1. A range shift display unit comprising target range detection means for detecting a target range selected based on a shift operation by a driver and generating a range signal corresponding to the detected target range, and display processing means for driving a display portion corresponding to the target range by a predetermined driving method for the target range.

2. The range shift display unit according to claim 1, further comprising shift means disposed at a plurality of shift positions corresponding to the range signal, and shift processing means for driving driving means based on the range signal and disposing the shift means at the shift position for the target range.

3. The range shift display unit according to claim 1, wherein the range includes a parking range at which a parking mechanism of a vehicle is locked and at least one range at which the parking mechanism is released.

4. The range shift display unit according to either claim 2 or 3, wherein the shift means is a shift valve for generating a range pressure corresponding to the shift position.

5. The range shift display unit according to claim 1, further comprising a display unit provided with a plurality of display portions corresponding to each range.

6. The range shift display unit according to claim 2, comprising shift position detection means for detecting the shift position of the shift means and generating a shift position signal, wherein the shift processing means drives the driving means based on the range signal and the shift position signal and disposes the shift means at the shift position for the target range.

7. The range shift display unit according to claim 6, wherein the display processing means drives the display portion corresponding to the target range by a first driving method for the target range until the shift means reaches the shift position for the target range, and drives the display portion corresponding to the target range by a second driving method for the target range after the shift means has reached the shift position for the target range.

8. The range shift display unit according to claim 6, wherein the display processing means drives each of the display portions corresponding to transient ranges from a current range to the target range by a driving method for transient ranges until the shift means reaches the shift position for the target range.

9. A range shift display method comprising the steps of:
detecting a target range selected based on a shift operation by a driver, generating a range signal corresponding to the detected target range, driving driving means based on the range signal, disposing shift means at a shift position for the target range, generating a range pressure corresponding to the shift position, and driving a display portion corresponding to the target range among a plurality of display portions in a display unit by a driving method for a predetermined target range.
